# EUROPEAN PATENT APPLICATION

(11) **EP 1 865 286 A2**
(43) Date of publication of application: **12.12.2007**
(21) Application number: 07109609.3
(22) Date of filing: 05.06.2007
(51) Int. Cl.: G01C 21/16, G01C 21/20

(54) **Object locating in restricted environments using personal navigation**

(30) Priority: 06.06.2006 US 422528
(71) Applicant: HONEYWELL INC., Morristown, New Jersey 07962 (US)
(72) Inventor: Soehren, Wayne A., Wayzata, MN 55391 (US); Bye, Charles T., Eden Prairie, MN 55347 (US)
(74) Representative: Haley, Stephen

(57) **Abstract**

A method for locating at least one object in a restricted environment is disclosed. The method involves determining a measuring position with a navigation package, measuring a range between the at least one object and the measuring position, and establishing a location of the at least one object based upon the measuring position and the measured range.

## Description

This application is related to commonly assigned U.S. Patent Application Serial No. 09/572,238 (U.S. Patent No. 6,522,266), filed on May 17, 2000 and entitled "NAVIGATION SYSTEM, METHOD AND SOFTWARE FOR FOOT TRAVEL" (the '266 Patent). The '266 Patent is incorporated herein by reference.

This application is related to commonly assigned and co-pending U.S. Patent Application Serial No. 10/973,503 (Attorney Docket No. H0006505-1633) filed on October 26, 2004 and entitled "PERSONAL NAVIGATION DEVICE FOR USE WITH PORTABLE DEVICE" (the '503 Application). The '503 Application is incorporated herein by reference.

Reliable navigation systems have always been essential for estimating both distance traveled and position. For example, early navigating was accomplished with "deduced" (or "dead") reckoning. In dead-reckoning, a navigator finds a current position by measuring the course and distance the navigator has moved from some known point. Starting from the known point, the navigator measures out a course and distance from that point. Each ending position will be the starting point for the course-and-distance measurement. In order for this method to work, the navigator needs a way to measure a course and a way to measure the distance moved. The course is measured by a magnetic compass. Distance is determined by a time and speed calculation: the navigator multiplies the speed of travel by the time traveled to get the distance. This navigation system, however, is highly prone to errors, which when compounded can lead to highly inaccurate position and distance estimates.

An example of a more advanced navigation system is an inertial navigation system (INS). A basic INS consists of gyroscopes, accelerometers, a navigation computer, and a clock. Gyroscopes are instruments that sense angular rate. Gyroscopes provide an orientation of an object (for example, angles of roll, pitch, and yaw of an airplane). Accelerometers sense a linear change in rate (acceleration) along a given axis. In a typical INS, there are three mutually orthogonal gyroscopes and three mutually orthogonal accelerometers. The accelerometer configuration gives three orthogonal acceleration components which are vectorially summed. Combining gyroscope-sensed orientation information with summed accelerometer outputs yields a total acceleration in three-dimensional (3D) space. At each time-step of a system's clock, a navigation computer integrates this quantity by time once to determine the navigator's current velocity. The velocity is then time integrated again, yielding a current position. These steps are continuously iterated throughout the navigation process.

Many situations occur when it is necessary to locate one or more objects embedded (permanently or temporarily) inside a building or other difficult (that is, restrictive or global positioning system (GPS)-denied) environments on a regular basis. Traditional inertial navigation systems can be very costly and may not have sufficient accuracy for precise object location. Furthermore, current navigational aids are not available in all environments. For example, a navigational aid employing GPS technology requires an unobstructed view of the sky and is further susceptible to jamming. In these situations, an individual using a GPS-only navigational aid is without an estimate of both position and distance traveled. Unless a dedicated effort is made, locating the one or more objects remains a challenge during subsequent locating sessions.

The following specification addresses locating objects in restricted environments. Particularly, in one embodiment, a method for locating at least one object in a restricted environment is provided. The method involves determining a measuring position with a navigation package, measuring a range between the at least one object and the measuring position, and establishing a location of the at least one object based upon the measuring position and the measured range.

### In the Drawings;

These and other features, aspects, and advantages will become better understood with regard to the following description, appended claims, and accompanying drawings where:

FIG. 1 is a block diagram illustrating an embodiment of an environment for object locating using personal navigation;

FIG. 2 is a block diagram of an embodiment of a personal navigation system with a range finder;

FIG. 3 is a block diagram of another embodiment of a personal navigation system with a range finder; and

FIG. 4 is a flow diagram illustrating an embodiment of a method for locating at least one object in a restricted environment.

Like reference numbers and designations in the various drawings indicate like elements.

The following detailed description discusses at least one embodiment for locating objects in restricted environments using a personal navigation system. Advantageously, the personal navigation system is capable of determining positions in absolute or relative terms. By including a range finder, any object can be found within the restricted environment relative to a known location. When a user returns to a prior-known location, post-processing of measurement data using knowledge of the prior-known location will provide higher accuracy measurements than measurements obtained in a real-time measurement session.

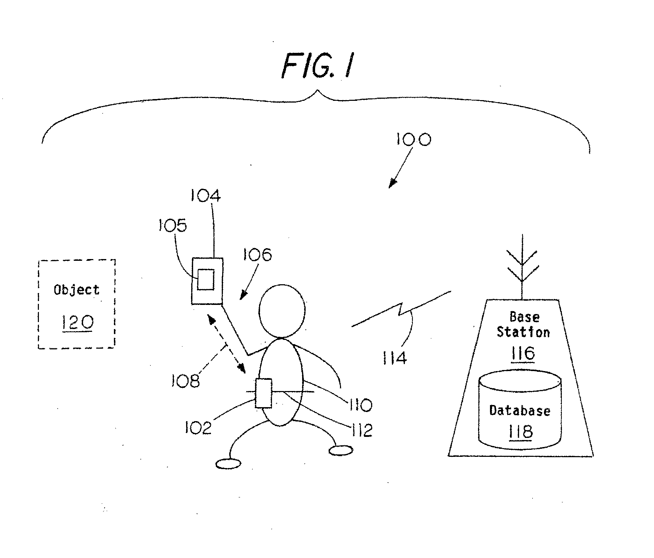

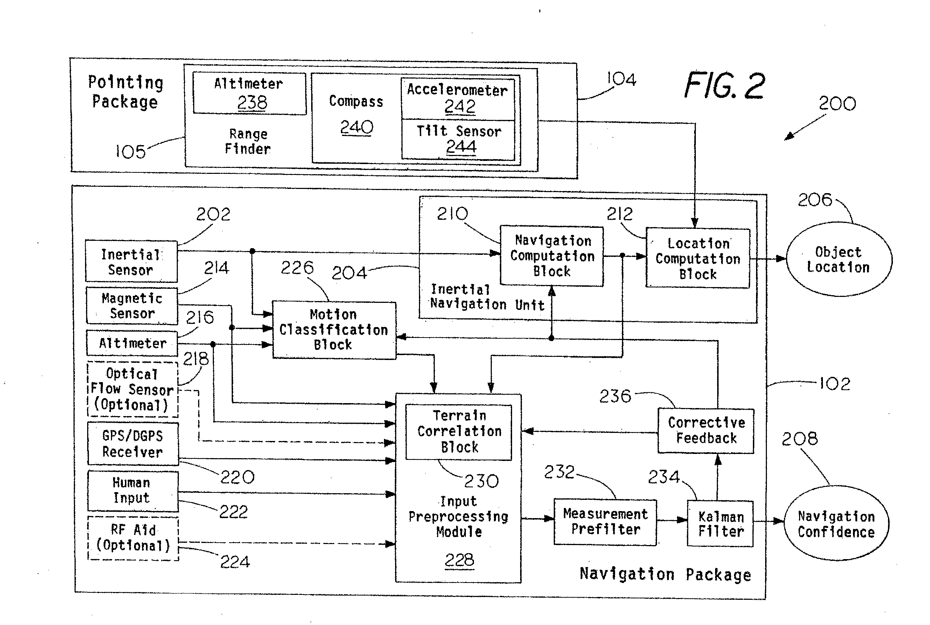

FIG. 1 is a block diagram illustrating an embodiment of an environment 100 for object locating using personal navigation. Environment 100 comprises at least one object 120, base station 116, and user 110 with navigation package 102 and pointing package 104. Base station 116 further includes database 118. Pointing package 104 further comprises at least one range finder 105. In the example embodiment of FIG. 1, navigation package 102 and pointing package 104 operate as personal navigation system 200. Personal navigation system 200 is described in further detail below with respect to FIG. 2. It is noted that for simplicity in description, a single object 120 is shown in FIG. 1. However, it is understood that environment 100 includes any appropriate number of objects 120 (for example, one or more objects) in environment 100. Examples of object 120 include, without limitation, one or more smoke alarms, wireless fidelity (Wi-Fi) access panels, damper controls, and switch panels within an infrastructure that is under construction or in need of repair or replacement. A location of each object 120 is recorded at the time of installation or prior to any restrictions within environment 100 (that is, encasement of each object 120 within the infrastructure). When map or blueprint data is available, one or more map-matching techniques are suitable for use with navigation package 102, as further described below with respect to terrain correlation block 230 of FIG. 2. The one or more map-matching techniques will modify an estimated position of object 120 with the map or blueprint data available.

Pointing package 104 is a device that is typically held in hand 106 of user 110 when user 110 attempts a range measurement of object 120 with pointing package 104. Examples of pointing package 104 include, without limitation, a laser range finder or similar device with ranging capability. In the example embodiment of FIG. 1. pointing package 304 is a range finder with heading and elevation angle measurements. Pointing package 104 uses the heading and elevation angle measurements when computing a position of object 120 based on a current position of user 110. Together, navigation package 102 and pointing package 104 estimate the current position of user 110. In one implementation, navigation package 102 and pointing package 104 communicate with one another over wireless communications link 108. Communication between navigation package 102 and pointing package 104 over wireless communications link 108 occurs when navigation package 102 and pointing package 104 are sufficiently close to each other.

Navigation package 102 attaches to user 110. For example, as shown in environment 100, navigation package 102 is attached to belt 112 worn by user 110. Such an embodiment is desirable to track a current position of user 110 while navigation package 102 determines the position of object 120 with respect to user 110. Pointing package 104 is typically subject to a wide and/or unpredictable range of movements when held in hand 106 of user 110. By separating navigation package 102 from pointing package 104, navigation package 102 is not required to handle and compensate for such a wide and unpredictable range of movements of pointing package 104. In this example embodiment, smaller and/or less expensive sensors and less complex algorithms are suitable for use in navigation package 102. These sensors and algorithms reduce cost, complexity, and size of navigation package 102.

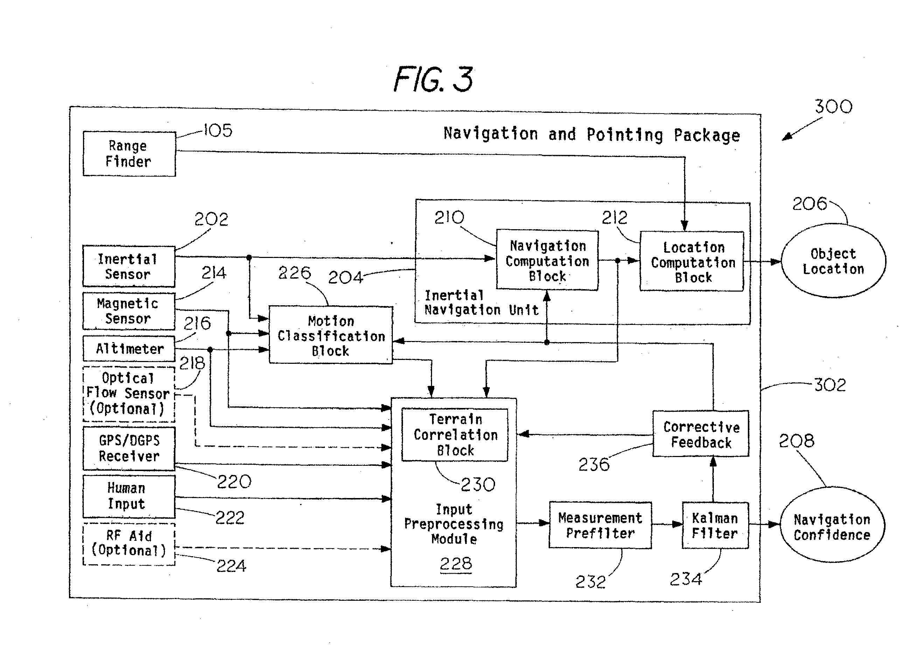

Pointing package 104 is not always in hand 106. For example, in an embodiment described below with respect to FIG. 3, navigation package 102 and pointing package 104 are integrated as one unit, e.g, navigation and pointing package 302. Navigation and pointing package 302 is attached to belt 112 of user 110 with a belt clip (not shown) or other attachment mechanism. Navigation and pointing package 302 is only removed from belt 112 when user 110 wishes to determine the location of object 120 by engaging a ranging function with navigation and pointing package 302 and pointing at object 120.

In operation, once user 110 establishes a location of object 120 with navigation package 102 and pointing package 104, the location of object 120 is periodically transmitted over communications link 114 from navigation package 102 to base station 116. In one implementation, communications link 114 is a wireless communications link. Base station 116 stores the location of each object 120 in database 118. After user 110 completes recording the location of each object 120, data contained in database 118 is post-processed by base station 116. In one implementation, the post-processing by base station 116 involves applying a filter to reduce redundant measurements and minimize possible measurement errors. The post-processed data in database 118 is representative of prior knowledge of the location of object 120. Post-processing provides higher accuracy measurements during subsequent locating sessions than measurements obtained in a real-time measurement session.

FIG. 2 is a block diagram of an embodiment of a personal navigation system 200 with a range finder. In this example embodiment, personal navigation system 200 corresponds to the personal navigation system illustrated above with respect to FIG. 1. In other embodiments, personal navigation system 200 is implemented in other ways and/or for other applications. Personal navigation system 200 comprises navigation package 102 and pointing package 104. Pointing package 104 includes at least one range finder 105. The at least one range finder 105 is in communication with inertial navigation unit 204. In the example embodiment of FIG. 2, the at least one range finder 105 is a laser range finder. The at least one range finder 105 further comprises altimeter 238 and compass 240. Compass 240 includes at least one accelerometer 242 and at least one tilt sensor 244. The at least one range finder 105 is a device that measures distance from user 110 to object 120 of FIG. 1. The at least one range finder 105 sends at least one laser pulse towards object 120 and measures how long it takes for the the at least one laser pulse to bounce off object 120 and return to user 110. Altimeter 238 measures current elevation of pointing package 104. Compass 240 measures azimuth (that is, a current horizontal direction) and elevation (that is, pointing angle relative to vertical position) of pointing package 104. Compass 240 is assisted in measuring the azimuth and the elevation of pointing package 104 by the at least one accelerometer 242 and the at least one tilt sensor 244.

Navigation package 102 also includes inertial sensor 202, magnetic sensor 214, and altimeter 216 (or other barometric pressure sensor). It is noted that for simplicity in description, a single inertial sensor 202, a single magnetic sensor 214, and a single altimeter 216 are shown in FIG. 2. However, it is understood that navigation package 102 supports any appropriate number of inertial sensors 202, magnetic sensors 214, and altimeters 216 (for example, one or more inertial sensors, one or more magnetic sensors, and one or more altimeters) in a single navigation package 102. In one implementation, inertial sensor 202, magnetic sensor 214, and altimeter 216 are implemented as one or more micro electro-mechanical systems (MEMS) sensors. Altimeter 216 measures a current altitude of navigation package 102. The at least one range finder 105, inertial sensor 202, magnetic sensor 214, and altimeter 216 generate information in the form of one or more analog signals or one or more digital data streams that is indicative of one or more physical attributes associated with personal navigation system 200 (for example, navigation information indicative of a position and/or movement of navigation package 102 and pointing package 104).

Navigation package 102 includes inertial navigation unit 204. In the example embodiment of FIG. 2, inertial navigation unit 204 further includes navigation computation block 210 in communication with location computation block 212. Inertial navigation unit 204 generates object location 206 from one or more signals output by inertial sensor 202. In one implementation, object location 206 comprises a position, velocity, and attitude estimate. For example, inertial sensor 202 includes an arrangement of at least three accelerometers and at least three gyroscopes that generate the position estimate. The at least three accelerometers sense a linear change in rate (that is, acceleration) along a given axis. The at least three gyroscopes sense angular rate (that is, rotational velocity). The at least three accelerometers are oriented around three mutually orthogonal axes (that is, the x, y, and z axes) and the at least three gyroscopes are oriented around three mutually orthogonal axes (that is, pitch, yaw, and roll axes). Outputs of the at least three accelerometers and the at least three gyroscopes are processed by navigation computation block 210.

In one implementation, at least three orthogonal outputs of the at least three accelerometers are vectorially summed by navigation computation block 210 to obtain an acceleration vector for navigation package 102. Navigation computation block 210 integrates the acceleration vector to obtain a velocity vector for navigation package 102. Next, navigation computation block 210 integrates the velocity vector to obtain a position change vector for navigation package 102. Further, at least three orthogonal outputs of the at least three gyroscopes are vectorially summed by navigation computation block 210 to obtain a rotational velocity vector for navigation package 102. Navigation computation block 210 integrates the rotational velocity vector to obtain an attitude change vector of navigation package 102. The position change vector and the attitude change vector are used to generate a position estimate. The position estimate is transferred to location computation block 212. Location computation block 212 receives a current position measurement with respect to object 120 from pointing package 104 as pointing package 104 changes position. Location computation block 212 combines the current position measurement, along with the position estimate from navigation computation block 210, and generates at least one range, bearing, and azimuth measurement of object 120.

Navigation package 102 also includes Kalman filter 234. Kalman filter 234 receives an output from inertial navigation unit 204 (for example, position, velocity, and attitude estimates). Kalman filter 234 generates information indicative of the confidence of the output from inertial navigation unit 204 (that is, navigation confidence 208). Kalman filter 234 also generates corrective feedback 236. In the example embodiment of FIG. 2, object location 206 and navigation confidence 208 are displayed to user 110 of FIG. 1. Corrective feedback 236 is used by other components of navigation package 102 as feedback for processing performed by the respective components. For example, corrective feedback 236 is provided to inertial navigation unit 204 for use by navigation computation block 210 to control navigation error growth. Another example of this implementation is further described in the '266 Patent.

In the example embodiment of FIG. 2, one input that is supplied to Kalman filter 234 is a distance-traveled estimate output by motion classification block 226. Motion classification block 226 implements an algorithm that models step distance (also referred to here as a "step model"). For example, a linear relationship between step size and walking speed (tailored to a particular user) is used. A particular example of this linear relationship is found in Biomechanics and Energetics of Muscular Exercise, by Rodolfo Margaria (Chapter 3, pages 107-124. Oxford: Clarendon Press 1976).

Motion classification block 226 incorporates output signals from inertial sensor 202, magnetic sensor 214, and altimeter 216 to estimate step frequency and direction. In one implementation, magnetic sensor 214 comprises at least three magnetic sensors 114 oriented around three mutually orthogonal axes (that is, the x, y, and z axes). Distance traveled and direction of travel are determined using both step frequency (that is, the number of steps per unit of time) along with the heading (direction) of the steps. Motion classification block 226 takes the estimated step length, the step frequency, and the motion direction for the steps (derived from the navigation output or directly from a magnetometer) and calculates a distance-traveled estimate. Further, motion classification block 226 incorporates corrective feedback 236 generated by Kalman filter 234 in generating the distance-traveled estimate. An implementation of such an embodiment is described in the '266 Patent.

Navigation package 102 further includes at least one series of navigational aids. In the example embodiment of FIG. 2, the at least one series of navigational aids comprises optional optical flow sensor 218, GPS/differential GPS (DGPS) receiver 220, human input 222, and optional RF aid 224, each of which are discussed in turn below. It is noted that for simplicity in description, a single optional optical flow sensor 218, a single GPS/DGPS receiver 220, a single human input 222, and a single optional RF aid 224 are shown in FTG. 1. However, it is understood that in other embodiments of navigation package 102 different numbers and/or combinations of a optional optical flow sensors 218, GPS/DGPS receivers 220, human inputs 222, and optional RF aids 224 (for example, one or more GPS/DGPS receivers 220, human inputs 222, and optional RF aids 224) are used. In an alternate embodiment, optical flow sensor 218 is implemented as one or more vision sensors that measure at least one position change of navigation package 102.

GPS/DGPS receiver 220 receives at least one GPS RF signal from one or more GPS satellites. GPS/DGPS receiver 220 outputs satellite data derived from the received GPS RF signals to Kalman filter 234 via input preprocessing module 228 and measurement pre-filter 232. The satellite data that GPS/DGPS receiver 220 outputs to Kalman filter 234 includes time and three-dimensional position and velocity information. In one implementation, GPS/DGPS receiver 220 provides Kalman filter 234 "raw" in-phase and quadrature (IQ) information for each of the GPS RF signals that GPS/DGPS receiver 220 is able to receive, regardless of whether the receiver 134 is able to receive four, less than four, or more than four GPS RF signals. From the IQ information received through input preprocessing module 228 and measurement pre-filter 232, Kalman filter 234 generates navigation confidence 208 and corrective feedback 236.

Human input 222 receives input from a user of personal navigation system 200. In one implementation, human input 222 comprises one or more buttons or keys (for example, a keypad) user 310 presses in order to input information to navigation package 102. In an alternative implementation, human input 222 comprises a device interface (for example, a universal serial bus (USB) interface, and a BLUETOOTH®, IEEE 802.11, or other wireless protocol interface) for communicatively coupling navigation package 102 to an input device (for example, base station 116 of FIG. 1) external to personal navigation system 200. An alternate implementation is described in the '503 Application. Human input 222 allows user 110 to input initial location information (for example, an absolute position of a known starting position of navigation package 102 at a given point in time) and, thereafter, one or more items of "landmark" information (for example, an identifier associated with a particular geographic landmark). The initial location information and "landmark" information is provided to Kalman filter 234 for generating corrective feedback 236. As discussed above with respect to FIG. 1, the initial location and/or landmark information is combined with range finder measurements from pointing package 104 in inertial navigation unit 204 to determine a location of object 120.

Optional RF aid 224 comprises at least one receiver adapted to receive one or more RF signals that are transmitted (or otherwise radiated) for a purpose other than navigation. The one or more RF signals are also referred to here as "signals of opportunity." Examples of signals of opportunity include, without limitation, cellular telephone and data signals, broadcast television signals, broadcast radio signals, wireless data communications (for example, BLUETOOTH, IEEE 802.11 or IEEE 802.16 networking communications) and RF "interference" signatures or profiles. Optional RF aid 224 further includes appropriate components to process the received signals of opportunity and derive navigation-related information. The derived navigation-related information includes, without limitation, time difference of arrival (TDOA), time of arrival (TOA), and signal-strength measurements and triangulation. Additional examples of derived navigation-related information include identification (that is, signal source), type or content, signature identification, profiling, pattern matching, landmarking, and bearing processing.

In an alternate implementation, optional RF aid 224 comprises a transmitter and receiver for engaging in two-way communications in order to receive or otherwise derive navigation-related information from a signal of opportunity. For example, optional RF aid 224 transmits a "beacon" signal that is received by one or more receivers external to personal navigation system 200. Equipment communicatively coupled to the external receivers triangulates a location of personal navigation system 200 and transmits position information back to navigation package 102 for reception by optional RF aid 224. In another alternate implementation, optional RF aid 224 transmits a "loopback" signal to a transceiver external to personal navigation system 200. The transceiver transmits the received signal back to optional RF aid 224. In still another alternate implementation, optional RF aid 224 (or another component included in navigation package 102) obtains information (for example, landmark information) from a data server by communicating over a public network such as the INTERNET or a public switched telephone network (PSTN). In still yet another implementation, optional RF aid 224 comprises an RF interrogator that communicates with any RF transponders (for example, active and/or passive RF transponders) located with the range of the RF interrogator. Information output by at least one magnetic sensor 106 (for example, bearing information) and information output by at least one altimeter 108 (for example, altitude information) is also input to Kalman filter 234 for generating navigation confidence 208 and corrective feedback 236.

Input preprocessing module 228 further comprises terrain correlation block 230. Terrain correlation block 230 receives altitude information from one or more of altimeters 116 and user navigation state information from navigation computation block 210. The altitude information comprises, for example, an absolute altitude measurement, a relative altitude measurement (that is, relative to ground level), an altitude change, and/or an altitude gradient. Terrain correlation block 230 derives terrain-correlation information from the altitude and user navigation state information (for example, position of navigation package 102). In one implementation, terrain correlation block 230 implements a minimum absolute differences (MAD) algorithm in which a set of altitude measurements from altimeter 216 are compared to a reference map for generation of 3D position error information. The 3D position error information is transferred to Kalman filter 234. For example, in environments where GPS/DGPS receiver 220 is unable to receive any GPS RF signals, the position error information from terrain correlation block 230 is used by Kalman filter 234 to generate corrective feedback 236.

A plurality of inputs to Kalman filter 234 are pre-processed by input preprocessing module 228 and measurement pre-filter 232. Input preprocessing module 228 receives input information from magnetic sensor 214, altimeter 216, optional optical flow sensor 118, GPS/DGPS receiver 220, human input 222, and optional RF aid 224. Input preprocessing module 228 translates the received input information from a measurement frame of reference of an information source to a navigation frame of reference of navigation package 102. Measurement pre-filter 232 performs various "reasonability" tests on the received information in order to filter out any input information that fails any of the reasonability tests. The various inputs to Kalman filter 234 allow personal navigation system 200 to compensate for one or more navigation errors that typically occur (for example, one or more unstable movements by user 110).

In operation, navigation package 102 attaches to, for example, a belt clip or a backpack worn by user 110. Initial information, such as initial absolute position information, is input to or otherwise received by navigation package 102. In the example embodiment of FIG. 2, user 110 inputs the initial information via human input 222 and/or receives position information from GPS/DGPS receiver 220. In alternate embodiments, optional RF aid 224 supplies the navigation-related information (as further discussed above) and optional optical flow sensor 218 supplies the measured position change information (as further discussed above). The initial information is used by inertial navigation unit 204, based on input signals supplied by one or more of inertial sensors 202 and corrective feedback 236, to display a location of object 120 in object location 206. A display of navigation confidence for user 110 to interpret is displayed on navigation confidence 208.

Kalman filter 234 uses any available navigation information provided by input preprocessing module 228 to generate navigation confidence 208 and corrective feedback 236. Measurement pre-filter 232 filters out any navigation information received from input preprocessing module 228 that does not meet one or more "reasonableness" tests. For example, due to environmental factors such as jamming, an obstructed view of the sky, unavailability of user input or a signal of opportunity and/or malfunctioning component, any received information will not be used since it does not meet reasonableness test requirements. The received information will not be used in the processing performed by Kalman filter 234. In this manner, Kalman filter 234 uses all "reasonable" navigation information that is available.

At least a portion of corrective feedback 236 output by Kalman filter 234 refines processing performed by inertial navigation unit 204, motion classification module 126, terrain correlation module 130, and input pre-processing module 128 in order to reduce navigation error growth. In this example embodiment, corrective feedback 236 is shown, for the sake of clarity, as being supplied to inertial navigation unit 204, motion classification module 126, terrain correlation module 130, and input preprocessing module 228. It is to be understood that in some implementations, different types and formats of corrective feedback 236 are supplied to different parts of navigation package 102.

In the example embodiment of FIG. 2, pointing package 104 is separate from navigation package 102. Pointing package 104 is a handheld device that user 110 points at object 120 to determine the location of object 120. As an example, user 110 desires to document the location of each RF network device (object 120) recently installed in a building (environment 100). Once each object 120 is installed, user 110 points pointing package 104 at each object 120. The final position of each object 120 will be computed for display to user 110 and/or transmitted to base station 116 for inclusion in database 118.

After user 110 completes recording the location of each object 120 in real time, data contained in database 118 is post-processed by base station 116. In one implementation, the post-processing performed in base station 116 involves applying a filter to minimize measurement errors. For example, when inputs from user 110 do not correspond with results from object location 206, the filter will use a weighted average (or similar approach) to remove erroneous or redundant measurement, resulting in a higher accuracy measurement. In alternate embodiments, the post-processing performed by base station 116 involves applying one or more navigation models based on the real-time recordings gathered by user 110. The one or more navigation models estimate errors based on motion classification data and navigation sensor feedback data in one or more error estimation processes. The one or more error estimation processes are substantially similar to methods of motion classification and corrective feedback discussed above with respect to motion classification block 226 and corrective feedback 236.

Personal navigation system 200 is able to precisely determine the position of an object inside a building or other difficult environment with minimal effort. Personal navigation system 200 determines the position of object 120 in absolute (that is, latitude, longitude, altitude) or relative (that is, x, y, and z within environment 100) coordinates based on continuous processing of measurement input signals by corrective feedback 236. In this respect, personal navigation system 200 is considered a self-correcting system that allows user 110 to easily determine the location of one or more objects 120 located in environment 100.

FIG. 3 is a block diagram of another embodiment of a personal navigation system 300 with a range finder. Personal navigation system 300 closely resembles personal navigation system 200 of FIG. 2 and similar components and functionality are referenced in personal navigation system 300 using the same reference numerals from FIG. 2. In the example embodiment of FIG. 3, the at least one range finder 105 is incorporated within pointing and navigation package 302. Personal navigation system 300 eliminates a need for a separate pointing package 104 of FIG. 2. Similar to the discussion above with respect to FIG. 1, pointing and navigation package 302 is a handheld device that user 110 points at object 120 to determine a location of object 120. Personal navigation system 300 determines a range, bearing, and azimuth of object 120 within a single pointing and navigation package 302. Personal navigation system 300 provides a method to allow user 110 to navigate, with a high degree of confidence and accuracy, from a measuring location (that is, the location of user 110) to a point in an area or building (for example, environment 100) where object 120 is located.

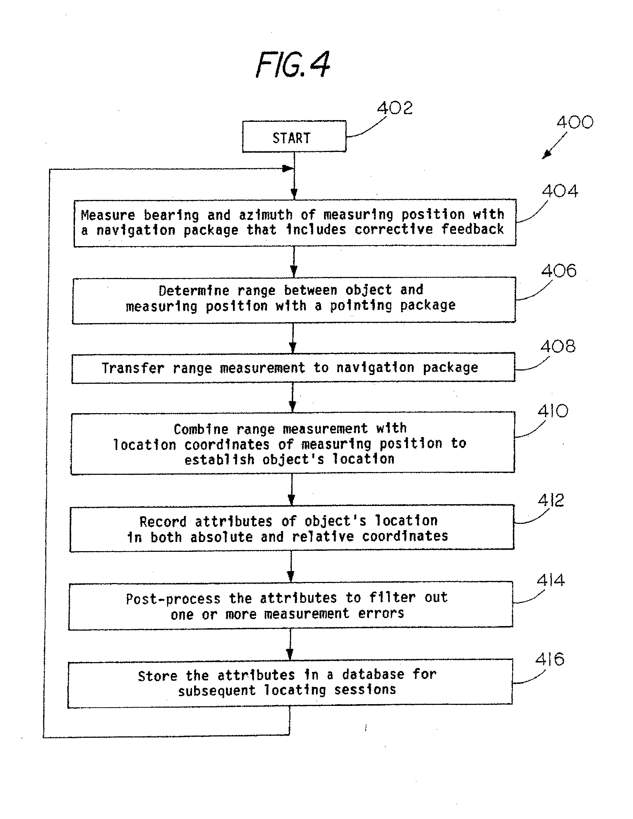

FIG. 4 is a flow diagram illustrating a method 400 for locating at least one object in a restricted environment. The method of FIG. 4 starts at block 402. A primary function of method 400 is to allow user 110 to navigate, with a high degree of confidence and accuracy, from a measuring position of user 110 to a specific point in environment 100 where object 120 is located. In the example embodiment of FIG. 4, method 400 measures bearing and azimuth of a current position with navigation package 102 at block 404. Motion classification block 226 classifies one or more motion movements of the measuring position, terrain correlation block 230 correlates a particular terrain with the measuring position, and Kalman filter 234 compensates for one or more navigation errors with corrective feedback 236.

At block 406, pointing package 104 determines a range between object 120 and the measuring position. After transferring a range measurement to navigation package 102 at block 408, navigation package 102 combines the range measurement with location coordinates of the measuring position to establish a location of object 120 at block 410. Attributes of the location of object 120 are recorded at block 412 for subsequent locating sessions. In one implementation, the location is displayed to user 110 and/or stored in database 118 in both absolute and relative coordinates. At block 414, the attributes are post-processed to filter out one or more measurement errors. In one implementation, location data from personal navigation system 200 is collected by database 118 at base station 116 while personal navigation system 200 is in use. The location data (that is, attributes) are post-processed to generate a higher accuracy navigation solution. For example, if user 110 traverses over the same position repeatedly, post-processing the location data to filter out one or more measurement errors for higher accuracy comprises estimating which of one or more navigation readings from the measuring position should be filtered out in order to generate the higher accuracy navigation solution. If object 120 is only visible during a first measurement, the post-processed attributes stored in database 118 at step 416 will accurately locate object 120 during subsequent locating sessions.

The methods and techniques described here are suitable for implementation in digital electronic circuitry, or with a programmable processor (for example, a special-purpose processor or a general-purpose processor such as a computer, firmware, software) or in combinations of them. An apparatus embodying these techniques will include appropriate input and output devices, a programmable processor, and a storage medium tangibly embodying program instructions for execution by the programmable processor. A process embodying these techniques is performed by a programmable processor executing a program of instructions to perform desired functions by operating on input data and generating appropriate output. Advantageously, theses techniques are suitable for implementation in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks; magneto-optical disks: and recordable-type media such as CD-ROMs and DVD-ROMs. Any of the foregoing is suitably supplemented by, or incorporated in, specially-designed application-specific integrated circuits (ASICs) for actual use in a particular personal navigation system.

## Claims

1. A device (200) for locating at least one object (120), comprising:
a pointing package (104) including at least one range finder (105);
a navigation package (102), in communication with the pointing package (104), the navigation package (102) adapted to combine a current position with at least one range measurement from the at least one range finder (105) to locate the at least one object (120) in a restricted environment (100).

2. The device (200) of claim 1, wherein the pointing package (104) and the navigation package (102) form a single pointing and navigation package (302).

3. The device (200) of claim 1, wherein the navigation package (102) comprises:
an inertial navigation unit (204) that receives input from at least one inertial sensor (202) and the at least one range finder (105), the inertial navigation unit (204) adapted to receive corrective feedback (236) from a Kalman filter (234) to control navigation error growth;
a motion classification block (226), adapted to receive one or more inputs from the at least one inertial sensor (202), at least one magnetic sensor (214), and at least one altimeter (216);
an input preprocessing module (228), adapted to receive one or more inputs from the at least one magnetic sensor (214), the at least one altimeter (216), and at least one series of navigational aids and provide the Kalman filter (234)with pre-filtered measurements; and
wherein the input preprocessing module (228) translates the one or more inputs for the inertial navigation unit (204) to accurately determine the current position of the navigation package (102).

4. The device (200) of claim 3, wherein the at least one series of navigational aids includes at least one of an optical flow sensor (218), a GPS/GPS receiver (220), a human input (222), and an RF aid (224).

5. The device (200) of claim 3, wherein the inertial navigation unit (204) further comprises a navigation computation block (210) coupled to a location computation block (212) that generates at least one range, bearing, and azimuth measurement of the at least one object (120).

6. The device (200) of claim 3, wherein the Kalman filter (234) generates a navigation confidence (208) indicative of the confidence of the output from the inertial navigation unit (204).

7. The device (200) of claim 3, wherein the motion classification block (226) models step distance to calculate a distance-traveled estimate.

8. The device (200) of claim 3, wherein the input preprocessing module (228) further comprises a terrain correlation block (230) that receives:
altitude information from the at least one altimeter (216); and
user navigation state information from the inertial measurement unit (204).
